# DEMANDE DE BREVET EUROPEEN

(11) **EP 2 661 973 A1**
(43) Date de publication de la demande: **13.11.2013**
(21) Numéro de dépôt: 13166766.9
(22) Date de dépôt: 07.05.2013
(51) Int. Cl.: A41D 31/00, D02G 3/44

(54) **Textile bicouche de protection contre la chaleur et vêtement de protection contre le feu et/ou la chaleur mettant en oeuvre ce textile**

(30) Priorité: 09.05.2012 FR 1254193
(71) Demandeur: Sofileta, 38300 Bourgoin Jallieu (FR)
(72) Inventeur: Bouret, Benoit, 69006 LYON (FR); Coulaux, Denis, 69300 CALUIRE ET CUIRE (FR)
(74) Mandataire: Cabinet Laurent & Charras

(57) **Abrégé**

Ce textile bicouche de protection contre la chaleur est constitué par l'assemblage :
- d'une couche intérieure, constituée d'une grille, d'un tricot ou d'un non-tissé réalisé en poly-para-phénylène téréphtalamide (para-aramide) et,
- d'une couche extérieure, constituée d'un tissu ou d'un tricot réalisé à base de fils de poly-méta-phénylène isophtalamide (méta-aramide), ledit fil étant constitué d'un filé de fibres dont la distribution de la longueur est comprise entre 40 et 200 millimètres, et dont la quantité minimum en section est de 40.

## Description

### DOMAINE DE L'INVENTION

L'invention concerne des textiles présentant une bonne résistance à la chaleur et au feu. De tels textiles sont plus particulièrement destinés à être mis en oeuvre dans le cadre de la confection de vêtements de protection à la flamme, à l'arc électrique, et de manière générale à toute source de chaleur. De tels vêtements sont donc plus particulièrement destinés aux pompiers, aux personnels militaires et aux personnes de l'industrie exposés à des risques d'exposition à la flamme.

### ETAT ANTERIEUR DE LA TECHNIQUE

Depuis les développements initiés en relation à la réalisation de textiles susceptibles de résister à la flamme, on connaît des fibres dites thermostables, c'est-à-dire résistant au feu. De telles fibres sont notamment constituées par les aramides, et notamment le méta-aramide, mieux connu sous la marque déposée NOMEX^{®}, et le para-aramide, mieux connu sous la marque déposée KEVLAR^{®}. Ces deux types de fibres synthétiques présentent des performances élevées, notamment en termes de thermostabilité, mais également en termes de résistance mécanique.

Le méta-aramide est préféré, pour certaines applications, en raison de sa meilleure affinité tinctoriale et sa plus grande souplesse que le para-aramide. De fait, il a également été proposé le mélange de telles fibres, tel que par exemple celui commercialisé par la société DUPONT DE NEMOURS sous la référence NOMEX^{®} type 455, constitué de 95% de méta-aramide et de 5% de para-aramide ou celui commercialisé par la même société sous la référence Nomex ® type N302, constitué de 93% de méta aramide 5% para -aramide 2% fibres antistatiques. Nonobstant leur succès commercial, ces mélanges ne donnent pas entière satisfaction pour un certain nombre de points, et notamment celui lié aux états de transformation et de préparation des fibres, notamment lors de la filature, du tissage, de la teinture et de l'entretien du textile.

En outre, sa résistance à l'abrasion est relativement réduite. Qui plus est, ce type de produit a une tendance au boulochage, c'est-à-dire la formation de petites boules pelucheuses à sa surface, principalement inhérente au frottement.

Pour lutter contre ces phénomènes, on doit alors mettre en oeuvre une densité de tissu suffisamment serrée pour limiter le déplacement des fils entre eux, et corolairement l'effet de cisaillement des fibres lors du frottement du tissu. Ce faisant, la perméabilité à l'air est dégradée et corolairement le confort au porté.

Une autre difficulté à prendre en considération est la capacité du textile résultant de la mise en oeuvre d'un tel mélange à résister à l'ouverture d'orifices lorsqu'il est soumis à la flamme, c'est-à-dire la résistance au « break open » (norme ISO 15025), expression anglo-saxonne traditionnellement employée dans le domaine considéré. La définition de la norme ISO 15025 définit le « break open » ou la formation d'un trou comme la rupture à périmètre continu et d'au moins 5 mm dans n'importe quelle dimension, causée par la fusion, l'incandescence ou l'inflammation du matériau.

La présente invention vise à mettre en oeuvre un textile s'affranchissant de ces différents inconvénients et optimisant, de manière supplémentaire, le confort de l'utilisateur.

### EXPOSE DE L'INVENTION

A cet effet, l'invention propose un textile bicouche de protection contre la chaleur. Selon l'invention, ce textile bicouche est constitué par l'assemblage :
- d'une couche intérieure, constituée d'une grille, d'un tricot ou d'un non-tissé réalisé en poly-para-phénylène téréphtalamide (para-aramide) et,
- d'une couche extérieure, constituée d'un tissu ou d'un tricot réalisé à base de fils de poly-méta-phénylène isophtalamide (méta-aramide), ledit fil étant constitué d'un filé de fibres dont la distribution de la longueur est comprise entre 40 et 200 millimètres, et dont la quantité minimum en section est de 40.

Selon une caractéristique de l'invention, et concernant la couche extérieure, la fibre de base, constitutive du fil de méta-aramide, est obtenue par un procédé de préparation connu sous le nom d'étirage-craquage. Ce procédé consiste à craquer un câble précurseur de filaments continus par étirage et rupture contrôlée, notamment entre des cylindres tournant à des vitesses différentes. Cette méthode permet d'arranger et d'aligner les zones cristallines du polymère, jusqu'à la rupture des liaisons chimiques les plus fragiles.

Ce faisant, on obtient une mèche avec des longueurs de fibres présentant une distribution régulière, typiquement entre 40 et 200 millimètres, dont chaque fibre unitaire contient une orientation cristalline optimisée dans le sens de la longueur de celle-ci.

Il en résulte que le fil obtenu de méta-aramide est de ténacité élevée, optimisant la résistance mécanique du textile ou du tissu en résultant. En outre, cette ténacité permet également d'optimiser la résistance à l'abrasion.

Parallèlement, la couche intérieure réalisée en para-aramide permet tout d'abord d'optimiser la résistance au phénomène de « break open ». Le para-aramide est réputé présenter une meilleure tenue à la flamme, cependant, il est également bien connu pour être moins résistant à l'abrasion et présenter une moins bonne tenue aux ultraviolets.

Parallèlement, le méta-aramide à haute ténacité mis en oeuvre pour la couche extérieure, et obtenu selon le procédé décrit précédemment, est léger et présente des propriétés mécaniques et une résistance au boulochage optimisées. L'association d'un tel matériau avec un tissu, un non-tissé ou un tricot de para-aramide permet de solutionner cette difficulté.

Au demeurant, la grille, le tricot, voire le non-tissé en para-aramide présentent des propriétés respirantes, qui permettent de favoriser l'évacuation de la sueur lorsque le textile en question est destiné à constituer un vêtement.

L'assemblage entre les deux couches est avantageusement réalisé par collage soit par un process de contrecollage « HOT MELT » par points, soit par un process d'enduction.

Selon une alternative, cet assemblage peut également être réalisé par ouatinage (par couture).

Cet assemblage permet de conserver les avantages de chacune des fibres de chacune des faces.

L'invention concerne également les vêtements de protection contre le feu et/ou la chaleur mettant en oeuvre ce textile bicouche.

### DESCRIPTION DETAILLEE DE L'INVENTION

Comme déjà dit, l'invention concerne un textile bicouche, plus particulièrement destiné à la confection de vêtements soumis au feu et à la chaleur, et donc de manière générale, destiné aux pompiers, aux militaires, voire au personnel des industries soumises à des sources de feu et de chaleur.

La face extérieure, par convention la plus éloignée du corps de l'utilisateur, est réalisée à base essentiellement de méta-aramide (poly méta-phénylène-isophtalamide). Cette face est constituée d'un tissu ou d'un tricot, dont le fil est constitué d'un filé de fibres, la distribution de la longueur desdites fibres étant comprise entre 40 et 200 millimètres, et la quantité minimum de fibres en section est de 40. On peut avantageusement intégrer dans le cadre de la réalisation du fil des fibres antistatiques, telles que par exemple constituées d'un noyau conducteur à base de fibres de carbone recouvert de matrices à base de polyamide 6 ou de polyamide 6.6.

Comme déjà dit, la fibre de base est obtenue par un procédé de préparation connu sous le nom d'étirage-craquage, dont la vocation est d'arranger et d'aligner les zones cristallines du polymère jusqu'à la rupture des liaisons chimiques les plus fragiles. On obtient ainsi un fil qui présente des propriétés mécaniques bien supérieures à celles obtenues par exemple par les autres procédés traditionnels d'obtention de fils.

La mèche de fibres craquées est affinée et effilée sur un système de filature à anneaux fibres longues. Le fil issu de cette filature présente une très bonne homogénéité permettant au textile mettant en oeuvre ce fil, une meilleure tenue au boulochage et à l'abrasion.

Avec un tel matériau de base (méta-aramide), outre le procédé de réalisation du fil, le titre est typiquement entre compris entre 85 et 220 dtex, et présente une ténacité lorsque le fil est composé de 100% de méta-aramide de 30 cN/tex. Cette valeur de ténacité est à comparer avec celle du précurseur de départ, en l'espèce de 36 cN/tex.

A l'aide d'un tel fil, on réalise donc la couche extérieure par tissage ou tricotage. Cette couche extérieure présente donc, en raison de la nature du matériau de base, de bonnes propriétés de résistance à la chaleur, outre en raison d'un fil de base de ténacité élevée, une meilleure résistance à l'abrasion et au boulochage.

Selon l'invention, la couche intérieure, c'est-à-dire la plus proche de l'utilisateur lorsque le textile de l'invention a vocation à constituer un vêtement, est réalisée à base de para-aramide. Typiquement, on utilise celui-ci sous la forme d'une grille de densité comprise entre 10 et 80 g/m². En effet, si la densité de la grille est inférieure à 10g/m², on n'observe pas d'effet technique majeur. En revanche, si cette densité est supérieure à 80g/m², on aboutit à un produit trop cher en termes de fabrication.

L'assemblage de ces deux couches est avantageusement réalisé par collage par points (mettant en oeuvre une colle « HOT MELT »), et typiquement une colle en polyuréthane ignifugé. La densité de colle ou tout élément permettant l'assemblage des deux couches entre elles n'excède pas 30 g/m².

Selon une variante, on pourrait également prévoir l'assemblage toujours par collage, mais par enduction.

Selon encore une autre alternative, l'assemblage des deux couches est réalisé par ouatinage, c'est-à-dire par couture à intervalles réguliers, tant en longueur qu'en largeur.

Le textile ainsi réalisé permet de conserver les propriétés de chacune des deux couches. Au demeurant, la couche intérieure en para-aramide permet de faire fonction d'écran, et donc d'optimiser encore la résistance du textile à la chaleur et au feu.

Parallèlement, le para-aramide, notamment présent sous forme de grille, permet de favoriser l'évacuation de l'humidité, et notamment la sueur et la transpiration. Dit autrement, il permet d'assurer la fonction mieux connue sous l'expression anglo-saxonne de « moisture management ».

Enfin, la mise en oeuvre d'une couche intérieure, par exemple réalisée en para-aramide, permet de satisfaire de manière plus efficace à la norme relative au « break open ».

## Revendications

1. Textile bicouche de protection contre la chaleur, constitué par l'assemblage :
- d'une couche intérieure, constituée d'une grille, d'un tricot ou d'un non-tissé réalisé en poly-para-phénylène téréphtalamide (para-aramide) et,
- d'une couche extérieure, constituée d'un tissu ou d'un tricot réalisé à base de fils de poly-méta-phénylène isophtalamide (méta-aramide), ledit fil étant constitué d'un filé de fibres dont la distribution de la longueur est comprise entre 40 et 200 millimètres, et dont la quantité minimum en section est de 40.

2. Textile bicouche de protection contre la chaleur selon la revendication 1, ***caractérisé* en ce que** la fibre de base constitutive du fil de méta-aramide est obtenue par étirage-craquage.

3. Textile bicouche de protection contre la chaleur selon l'une des revendications 1 et *2,* ***caractérisé* en ce que** l'assemblage des deux couches entre elles est réalisé par collage par points (HOT MELT), voire par enduction.

4. Textile bicouche de protection contre la chaleur selon l'une des revendications 1 et *2,* ***caractérisé* en ce que** l'assemblage des deux couches entre elles est réalisé par ouatinage.

5. Vêtements de protection contre le feu et/ou la chaleur comprenant un textile bicouche selon l'une des revendications 1 à 4
